# EUROPEAN PATENT SPECIFICATION

(11) **EP 0 934 160 B1**
(45) Date of publication and mention of the grant of the patent: **18.08.2004**
(21) Application number: 96937630.0
(22) Date of filing: 30.10.1996
(51) Int. Cl.: B32B 27/10, B65D 65/40

(54) **A DELAMINABLE PACKAGING LAMINATE AND A METHOD OF PRODUCING THE SAME**
DELAMINIERBARES VERPACKUNGSLAMINAT UND VERFAHREN ZU SEINER HERSTELLUNG
STRATIFIE D'EMBALLAGE POUVANT ETRE DELAMINE ET SON PROCEDE DE FABRICATION

(30) Priority: 30.10.1995 SE 9503817
(43) Date of publication of application: 11.08.1999
(73) Proprietor: Tetra Laval Holdings & Finance SA, 1009 Pully (CH)
(72) Inventor: LETH, Ib, S-273 64 Kävlinge (SE); BERLIN, Mikael, S-227 36 Lund (SE); LUNDGREN, Bo, S-244 36 Kävlinge (SE); BENTMAR, Mats, S-23337, Svedala (SE)
(74) Representative: Smart, Peter John
(86) International application number: PCT/SE1996/001403
(87) International publication number: WO 1997/016312

(56) References cited:
- EP-A- 0 085 919
- EP-A- 0 530 662
- EP-A- 0 615 838
- WO-A-93/16877

## Description

### TECHNICAL FIELD

The present invention relates to a delaminable packaging material comprising layers of paper or paperboard and plastic, and also to a method of producing the delaminable packaging laminate.

### BACKGROUND ART

In the packaging industry, use is often made of packages of the single-use type, and a large group of these so-called single-use disposable packages is produced from a laminated packaging material (packaging laminate) comprising a paper or paperboard layer and outer, liquid-tight polyethylene coatings.

The point of departure for the composition of the laminated packaging material (the packaging laminate) is to provide the best possible protection to the product which is to be packed, at the same time as the package must be sufficiently mechanically strong and stable to allow for reliable and convenient handling.

A package consisting solely of paper or paperboard and polyethylene is both configurationally stable and liquid-tight, but lacks gas barrier properties. In order to supplement the package with tightness properties vis-à-vis gases, in particular oxygen gas, the packaging laminate is normally provided with a layer of aluminium (so-called Al-foil). Other materials than Al-foil possessing corresponding desired tightness properties also occur in commercial, single-use disposable packages, such as for example EVOH which is a copolymer of ethylene and vinyl alcohol.

A packaging laminate of the above-described type is conventionally produced by a simple extrusion process, in which a web of paper or paperboard is coated on both sides with thin layers of extruded polyethylene for the formation of the outer, liquid-tight plastic layers of the packaging laminate. A packaging laminate with supplementary gas tightness properties is produced, for example, in that a web of paper or paperboard is united with a prefabricated web of aluminium which, with good adhesive strength, is bonded to the paper or paperboard web, with the aid of a sealing layer (adhesive or binder) which is extruded between the webs. The webs are thereafter coated with thin layers of polyethylene which are extruded on both sides of the webs for the formation of the outer, liquid-tight plastic layers of the packaging laminate.

By such means, a packaging laminate of the type described by way of introduction can be given good integrity and good internal adhesive strength (bonding), which is a vital precondition to be able to produce a mechanically strong and configurationally stable package from the packaging laminate.

While the good integrity and internal adhesive or bonding strength of the packaging laminate are both desirable and necessary to be able to produce packages possessing superior mechanical strength and configurational stability, these are just as important and decisive factors when it comes to being able to recycle the individual materials in the used packaging laminate as far as is possible, and being able, by recovering and recycling them in as pure form as possible, to re-use these individual materials. For example, there has long been a need in this art to be able to recycle the fibre content of the packaging laminate (its paper or paperboard fraction), but because of the powerful adhesive bond between the paper or paperboard layer and the adjacent sealing layers (or polyethylene layers), it has proved difficult to separate these layers from one another without a prohibitive loss of fibres which adhere to the plastic after the separation treatment. Document EP-A-0 085 919 discloses that paper and polyethylene layers may be bonded with polyvinyl alcohol, which provides gas barrier properties. The aqueous polyvinyl alcohol solution used to form the bonding layer may also comprise alginate or carboxymethyl-cellulose.

### OBJECTS OF THE INVENTION

One object of the present invention is therefore to obviate the above-outlined drawback in connection with the previously described prior art packaging laminate.

A further object of the present invention is to realise a packaging laminate which, despite good integrity and good internal cohesion between the individual layers of the packaging laminate, is easy to delaminate and therefore easy to recycle and re-use without excessive material losses, as is the case in the prior art packaging laminate.

Yet a further object of the present invention is to realise a packaging laminate comprising layers of paper or paperboard and plastic from which at least the fibre content (the paper or paperboard) of the packaging laminate may readily be recycled and re-used to the greatest possible extent and in the purest possible form.

A still further object of the invention is to provide a packaging laminate which is easy to delaminate and possesses oxygen gas barrier properties.

### SOLUTION

These and other objects and advantages will be attained according to the present invention by means of a packaging laminate possessing the characterizing features as set forth in appended Claim 1.

Expedient and preferred characterizing features of the packaging laminate according to the present invention are further apparent from the characterizing clauses of appended subclaims 2 to 8.

Using the adhesive layer of water-soluble polymer which is applied between the paper and paperboard layer and plastic layer (and plastic layers, respectively), there will be realised according to the present invention a packaging laminate which, on the one hand, displays good integrity and good internal cohesion (adhesive bonding strength) between the paper or paperboard layer and the above-mentioned plastic layers and, on the other hand, is easy to delaminate, i.e. separate into its individual material layers, after use of the packaging laminate. More precisely, it has proved to be possible to produce, from the packaging laminate according to the present invention, packages possessing gas barrier properties and sufficient mechanical strength and configurational rigidity to withstand external stresses which occur in connection with normal handling and use, without being deformed or otherwise destroyed, and from which the fibre content (paper or paperboard) of the package may readily be recycled and re-used employing simple available means, without excessive losses arising out of fibres which are detached and accompany the separated plastic fraction.

Examples of such binders or adhesives of water-soluble polymer which act as "release agent layers" may be either so-called biopolymers or synthetic, water-soluble polymers. Well-functioning practical examples of the above biopolymers are carboxy methyl cellulose (CMC), starch, starch derivatives, dextrin and pectin, of which starch and starch derivatives are more preferred. A well-functioning and practical example of a synthetic water-soluble polymer is polyvinyl alcohol.

In practical experiments that have been carried out in accordance with the present invention, it has proved that the interjacent layer, even at very slight amounts such as down to approximately 0.1g (dry weight)/m², makes for a well-integrated and, at the same time, readily delaminable packaging laminate. According to the invention, a practical quantity range for the interjacent binder or adhesive layer is therefore of the order of approximately 0.1g (dry weight)/m² to approximately 5g (dry weight)/m², preferably approximately 0.5-1g (dry weight)/m².

According to another aspect of the present invention, there will further be realised a method of producing a well-integrated, but readily delaminable packaging laminate comprising a layer of paper or paperboard and layers of plastic. The method according to the present invention has been given the characterizing features as set forth in the independent Claim 9, while preferred and advantageous characterizing features of the method according to the present invention are apparent from appended subclaims 10, and 11.

### BRIEF DESCRIPTION OF THE ACCOMPANYING DRAWING

The present invention will now be described in greater detail hereinbelow with the aid of a non-restrictive example of a packaging laminate according to one preferred embodiment of the present invention and with reference to the accompanying Drawing, in which:
Fig. 1 schematically illustrates a cross section of a packaging laminate according to one embodiment of the present invention; and
Figs. 2 schematically illustrates a method of producing the packaging laminate of Fig. 1.

### DESCRIPTION OF PREFERRED EMBODIMENT

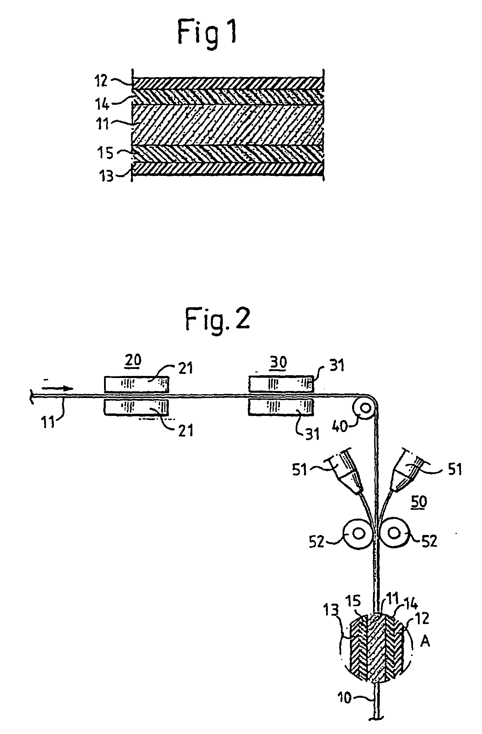

Referring to the Drawing, Fig. 1 thus schematically illustrates a cross section of a packaging laminate according to a simple embodiment of the present invention, carrying the generic reference numeral 10. The expression "simple embodiment" is here taken to signify that the packaging laminate 10, in order to illustrate the principle in as clear a manner as possible, is shown with but a very limited number of individual layers. In practice however, the packaging laminate may comprise a multiple number of layers than that shown on the Drawing. While the packaging laminate 10 is illustrated as possessing only four separate layers, it will thus be obvious to a person skilled in the art that this number may vary and that the following description should not, therefore, be considered as restrictive of the present invention.

The packaging laminate 10 has a configurationally rigid, but foldable core layer 11 of paper or paperboard whose major function is to afford mechanical strength and stability to the packaging laminate 10 in order to make for the production of configurationally stable packages from the packaging laminate 10. The core layer 11 is that layer in the packaging laminate 10 which displays the relatively greatest thickness, which may vary from approximately 100µm up to approximately 300-400µm for that type of packaging laminate to which the present invention specifically relates. The thickness of the core layer 11 is, however, no critical parameter for the present invention and, in its broadest scope, the present invention may be applied to packaging laminates with both smaller and greater core layer thicknesses than those specifically disclosed herein.

On both sides of the core layer 11, there are outer layers 12, 13 of plastic, with whose aid the inner liquid-absorbent fibre layer 11 (the paper or paperboard) is protected from both directions against the penetration of moisture and wet which could otherwise readily penetrate and render the fibre layer sloppy and unusable. The choice of plastic in these two outer layers 12 and 13 may vary, but preferably the layers consist of the same plastic as in the illustrated embodiment, preferably an extrudable thermoplastic, such as for example low density polyethylene (LDPE). One of the advantages with LDPE layers as the outer liquid-tight plastic layers 12 and 13 in the packaging laminate 10 according to the present invention is that they may readily be sealed to one another and to themselves by so-called heat sealing, which is an efficient method for giving a package produced by fold formation its desired permanent geometric configuration during conversion of the packaging laminate 10 into configurationally stable packages, as will be described in greater detail below. The thickness of each respective outer plastic layer 12 and 13 is preferably selected such that the desired moisture and wet-protection for the fibre layer 11 is achieved, at the same time as efficient heat-sealing is made possible between mutually facing surfaces of the two layers. In practice, the thickness of each respective plastic layer 12 and 13 amounts to between approximately 10 and 40µm.

As is apparent from Fig. 1, both the outer plastic layer 12 and the outer plastic layer 13 are, in this simple embodiment, bonded to the inner paper or paperboard layer 11 by the intermediary of respective interjacent layers 14 and 15 of a binder or adhesive possessing such properties that it bonds with good adhesive strength both to the paper or paperboard layer 11 and to each respective outer plastic layer 12 and 13.

Examples of such adhesives or binders according to the present invention may be either so-called biopolymers or synthetic polymers which, in addition to their good adhesive bonding capacity, must moreover be water-soluble in order to make possible an easy delamination of the packaging laminate 10 after use. Examples of usable so-called biopolymers according to the invention are carboxy methyl cellulose (CMC), starch, dextrin and pectin, of which starch or starch derivatives are more preferred. A well-functioning example of a water-soluble synthetic polymer is polyvinyl alcohol.

The interjacent adhesive binder layer 14, 15 acting as the "release agent layer" on delamination may have a thickness which varies from approximately 0.1g (dry weight)/m² and upwards, such as 0.1-5g (dry weight)/m². Preferably, the thickness is approximately 0.5-1g (dry weight)/m2.

Surprisingly it has been found that applied layers of starch have oxygen gas barrier properties. Quite surprisingly, commercially acceptable gas barrier properties are achieved by means of very small amounts of aqueous starch polymers.

By way of example, it has been found that applying starch polymer layers 14,15 having a thickness of 0,5 and 1g/m², respectively, provides an oxygen gas barrier of 289 cm³/m², at 24 h and 1 atm.

It has further been found that applying polymer layers 14,15 having a thickness of 1g and 1,5 g/m², respectively , provides an oxygen gas barrier of 141 cm³/m² at 24 h and 1 atm.

The above barrier properties should be compared with those of a conventional paperboard-polyethylene laminate without a conventional barrier layer, such as an EVOH-layer or an Al-foil, which laminate has an oxygen gas barrier of 3000 cm³/m² at 24h and 1 atm.

The packaging laminate 10 according to the invention may be produced in the manner which is schematically illustrated in Fig. 2, in which the same reference numerals as in Fig. 1 have been employed for same or corresponding parts, so as to facilitate a comparison of the two Drawing figures.

A web 11 of paper or paperboard is led in the direction of the arrow from a magazine reel (not shown) off to the left in Fig. 2 to a coating station at 20 at which both sides of the web 11 are, using conventional coating apparatus 21, coated with a thin layer of an aqueous solution or dispersion of the selected aqueous polymer, for example starch or polyvinyl alcohol. The quantity of the aqueous solution or dispersion which is applied on both sides of the web 11 is selected in such a manner that each respective applied polymer layer has a thickness of between 0.1 and 5g (dry weight)/m², preferably approximately 0.5-1g (dry weight)/m².

The double-sided coated web 11 is led further to a drying station at 30 at which the web is dried on both sides with the aid of a drying apparatus 31 for removing water (drying) from the previously applied aqueous polymer layer. After the drying, the thickness of each respective polymer layer, as was mentioned earlier, should preferably be between 0.1 and 5g (dry weight)/m², ideally approximately 0.5-1g (dry weight)/m².

From the drying station at 30, the dried web 11 is led further via a bending roller 40 to an extruder station at 50 at which the web 11 is coated on both sides with thin outer layers of plastic which, with the aid of suitable extruders 51, are extruded onto the dried polymer layers, at the same time as the web is led through the nip between two rotary cooling rollers 52, 52, for the formation of the finished packaging laminate 10, as shown in enlarged form within the encircled region at A. As was mentioned previously, the extruded plastic is preferably a thermoplastic, preferably a low density polyethylene (LDPE), which makes for an efficient conversion of the packaging laminate 10 into liquid-tight, dimensionally stable packages by so-called heat sealing.

From sheet or web-shaped, preferably pre-creased and colour decorated, blanks of the packaging laminate 10, liquid-tight, dimensionally stable packages of the single-use disposable type are produced in accordance with conventional "form-fill-seal" technology, according to which the packages are formed, filled and sealed by means of modem, rational packaging and filling machines. From, for example, a web of the packaging laminate, such packages are produced in that the web is first reformed into a tube, by both longitudinal edges of the tube being united with one another by heat-sealing in a longitudinal overlap joint seal. The tube is filled with the pertinent contents, for example liquid food, and is divided into individual packages by repeated transverse sealings of the tube, transversely across the longitudinal axis of the tube, beneath the level of the contents in the tube. The packages are finally separated from one another by transverse incisions along the transverse seals and are given the desired geometric, normally parallelepipedic form by an additional forming and heat-sealing operation in a per se known manner.

After use, the material in the packages may, in a simple manner and employing available techniques and equipment, readily be separated into its individual components, and in very pure form be recycled and re-used. According to the invention, in particular the fibre content of the packages (the paper or paperboard in the core layer of the packaging laminate) may especially be recycled in very large quantities and be re-used in extremely pure form, in that the empty, used packages are first mechanically comminuted into small pieces or strips. The comminuted material is fed into a conventional pulper and is mechanically processed by agitation in hot water at 40-60°C for dissolving the layer of water-soluble polymer acting as the "release agent", whereby the fibres may effectively be separated from the plastic without any fibres adhering to and accompanying the plastic surface. The thus separated fibre and plastic fractions are thereafter physically separated from one another whereby the separated fibres may, in very large quantity, be recycled and be re-used in extremely pure form, for example for the new production of paper or paperboard.

It will thus be obvious from the foregoing description that a packaging laminate according to the present invention makes possible the production of liquid-tight, dimensionally stable packages, at the same time as the packaging laminate, and packages made from the packaging laminate, respectively, may readily be delaminated and, as a result, readily be recycled and re-used, employing simple techniques and already available equipment. In particular, the present invention makes for a paper or paperboard based packaging laminate from which practically the entire fibre content of the packaging laminate (paper or paperboard) may be recycled and re-used in extremely pure form.

A number of modifications and variations of the above. specifically described packaging laminate will be obvious to a person skilled in the art, without departing from the inventive concept as herein disclosed. For example, the packaging laminate, in addition to those layers which are mentioned above, may contain a plurality of other layers of the same or of different materials, for example further barrier materials (e.g. Al-foil or EVOH). In such cases, the packaging laminate according to the present invention may include additional adhesive or binder layers functioning as release agent layers between the above-mentioned additional layers in order to make possible a simple delamination of the packaging laminate so that these additional layers may also be recycled and re-used. Such modifications and variations therefore lie within the scope of the inventive concept as this is defined in the appended Claims.

## Claims

1. A packaging laminate having oxygen gas barrier properties comprising a core layer of paper or paperboard (11) and one or more layers (12, 13) of plastic bonded to one another by the intermediary of an interjacent bonding layer (14, 15) which also provides said gas barrier properties, **characterised in that** the bonding layer (14, 15) comprises starch or starch derivative.

2. The packaging laminate a claimed in Claim 1, **characterised in that** the plastic layer (12, 13) is united with the starch layer by means of surface fusion.

3. The packaging laminate as claimed in Claim 1, **characterised in that** the plastic layer (12, 13) is extruded on to the starch layer.

4. The packaging laminate as claimed in any one of Claims 1 to 3, **characterised in that** the bonding layer (14, 15) is present in a quantity of between 0.1 and 5 g/m², preferably between 0.5 and 1 g/m² (dry weight).

5. The packaging laminate as claimed in any one of Claims 1 to 4, **characterised in that** the bonding layer (14, 15) is present in a quantity in the order of 1.5 g/m² (dry weight) .

6. The packaging laminate as claimed in any of the preceding claims, wherein the plastic is a thermoplastic polymer.

7. The packaging laminate as claimed in any of the preceding claims, **characterised in that** the plastic is a low density polyethylene (LDPE).

8. The packaging laminate as claimed in any of the preceding claims, **characterised in that** it provides an oxygen gas barrier of 289 cm³/m² at 24 h, 1 atm, or lower.

9. A method of producing a packaging laminate (10) as claimed in Claim 1, **characterised in that** there is applied, on at least one side of the core layer web (11), a thin layer (14, 15) of an aqueous solution of starch derivative; that the web is dried so as to remove water from the applied aqueous starch or starch derivative layer (14, 15); and that the dried web is united with a plastic film (12, 13) which is extruded onto the web and is bonded to the web by surface fusion with the interjacent layer (14, 15) of starch or starch derivative.

10. The method as claimed in Claim 9, **characterised in that** the aqueous starch solution is applied by a dispersion coating operation.

11. The method as claimed in Claim 9 or 10, **characterised in that** the aqueous starch solution is applied in such a quantity that the applied layer of starch or starch derivative (14, 15) after drying is present in a quantity of between 0.5 and 1 g/m².

12. Use of starch or a starch derivative as an interjacent bonding layer in a packaging laminate for bonding of plastic to a core layer of paper or paperboard in order to provide gas barrier properties.

## Patentansprüche

1. Verpackungslaminat mit Sperreigenschaften für Sauerstoffgas, umfassend eine Kernschicht aus Papier oder Pappe (11) und eine oder mehrere Schicht(en) (12, 13) aus Kunststoff, aneinandergebunden durch Vermittlung einer dazwischenliegenden Bindungsschicht (14, 15), die auch die Gassperreigenschaften bereitstellt, **dadurch gekennzeichnet, dass** die Bindungsschicht (14, 15) Stärke oder ein Stärkederivat umfasst.

2. Verpackungslaminat, wie in Anspruch 1 beansprucht, **dadurch gekennzeichnet, dass** die Kunststoffschicht (12, 13) mit der Stärkeschicht über Oberflächenverschmelzung verbunden ist.

3. Verpackungslaminat, wie in Anspruch 1 beansprucht, **dadurch gekennzeichnet, dass** die Kunststoffschicht (12, 13) auf die Stärkeschicht extrudiert wird.

4. Verpackungsschicht, wie in einem der Ansprüche 1 bis 3 beansprucht, **dadurch gekennzeichnet, dass** die Bindungsschicht (14, 15) in einer Menge zwischen 0,1 und 5 g/m², vorzugsweise zwischen 0,5 und 1 g/m² (Trockengewicht) vorhanden ist.

5. Verpackungslaminat, wie in einem der Ansprüche 1 bis 4 beansprucht, **dadurch gekennzeichnet, dass** die Bindungsschicht (14, 15) in einer Menge in der Größenordnung von 1,5 g/m² (Trockengewicht) vorhanden ist.

6. Verpackungslaminat, wie in einem der vorstehenden Ansprüche beansprucht, worin der Kunststoff ein thermoplastisches Polymer ist.

7. Verpackungslaminat, wie in einem der vorstehenden Ansprüche beansprucht, **dadurch gekennzeichnet, dass** der Kunststoff ein Polyethylen niedriger Dichte (LDPE = low density polyethylene) ist.

8. Verpackungslaminat, wie in einem der vorstehenden Ansprüche beansprucht, **dadurch gekennzeichnet, dass** es eine Sauerstoffgassperre von 289 cm³/m² bei 24 h, 1 atm oder darunter bereitstellt.

9. Verfahren zur Herstellung eines Verpackungslaminats (10), wie in Anspruch 1 beansprucht, **dadurch gekennzeichnet, dass** man auf mindestens eine Seite des Kernschichtgewebes (11) eine dünne Schicht (14, 15) einer wässrigen Lösung eines Stärkederivats aufträgt, das Gewebe trocknet, um Wasser auf der aufgetragenen wässrigen Schicht (14, 15) aus Stärke oder Stärkederivat zu entfernen, und das getrocknete Gewebe mit einem Kunststofffilm (12, 13) verbindet, der auf das Gewebe extrudiert wird und an das Gewebe über Oberflächenverschmelzung mit der zwischenliegenden Schicht (14, 15) aus Stärke oder Stärkederivat gebunden ist.

10. Verfahren, wie in Anspruch 9 beansprucht, **dadurch gekennzeichnet, dass** die wässrige Stärkelösung über ein Dispersionbeschichtungsverfahren aufgetragen wird.

11. Verfahren, wie in Anspruch 9 oder 10 beansprucht, **dadurch gekennzeichnet, dass** die wässrige Stärkelösung in einer solchen Menge aufgetragen wird, dass die aufgetragene Schicht aus Stärke oder Stärkederivat (14, 15) nach dem Trocknen in einer Menge zwischen 0,5 und 1 g/m² vorhanden ist.

12. Verwendung von Stärke oder einem Stärkederivat als zwischenliegende Bindungsschicht in einem Verpackungslaminat zum Binden von Kunststoff an eine Kernschicht aus Papier oder Pappe, um Gassperreigenschaften bereitzustellen.

## Revendications

1. Stratifié d'emballage ayant des propriétés barrières à l'oxygène gazeux comprenant une couche centrale de papier ou de carton (11) et une ou plusieurs couches (12, 13) de matière plastique liées les unes aux autres par l'intermédiaire d'une couche de liaison intercalée (14, 15) qui fournit également lesdites propriétés barrières au gaz, **caractérisé en ce que** la couche de liaison (14, 15) comprend de l'amidon ou un dérivé d'amidon.

2. Stratifié d'emballage selon la revendication 1, **caractérisé en ce que** la couche de matière plastique (12, 13) est unie à la couche d'amidon à l'aide d'une fusion superficielle.

3. Stratifié d'emballage selon la revendication 1, **caractérisé en ce que** la couche de matière plastique (12, 13) est extrudée sur la couche d'amidon.

4. Stratifié d'emballage selon l'une quelconque des revendications 1 à 3, **caractérisé en ce que** la couche de liaison (14, 15) est présente en une quantité comprise entre 0,1 et 5 g/m², de préférence entre 0,5 et 1 g/m² (poids sec).

5. Stratifié d'emballage selon l'une quelconque des revendications 1 à 4, **caractérisé en ce que** la couche de liaison (14, 15) est présente en une quantité de l'ordre de 1,5 g/m² (poids sec).

6. Stratifié d'emballage selon l'une quelconque des revendications précédentes, dans lequel la matière plastique est un polymère thermoplastique.

7. Stratifié d'emballage selon l'une quelconque des revendications précédentes, **caractérisé en ce que** la matière plastique est un polyéthylène basse densité (LDPE).

8. Stratifié d'emballage selon l'une quelconque des revendications précédentes, **caractérisé en ce qu'**il fournit une barrière à l'oxygène gazeux de 289 cm³/m² pendant 24 h, sous 1 atm, ou inférieure.

9. Procédé pour produire un stratifié d'emballage (10) selon la revendication 1, **caractérisé en ce qu'**une couche mince (14, 15) d'une solution aqueuse de dérivé d'amidon est appliquée sur au moins un côté de la toile de la couche centrale (11), ; **en ce que** la toile est séchée de façon à éliminer l'eau de la couche d'amidon ou de dérivé d'amidon appliquée (14, 15) ; et **en ce que** la toile séchée est unie à un film de matière plastique (12, 13) qui est extrudé sur la toile et est liée à la toile par une fusion superficielle avec la couche intercalée (14, 15) d'amidon ou de dérivé d'amidon.

10. Procédé selon la revendication 9, **caractérisé en ce que** la solution aqueuse d'amidon est appliquée par une opération de dépôt par dispersion.

11. Procédé selon la revendication 9 ou 10, **caractérisé en ce que** la solution aqueuse d'amidon est appliquée en une quantité telle que la couche appliquée d'amidon ou de dérivé d'amidon (14, 15) après le séchage est présente en une quantité comprise entre 0,5 et 1 g/m².

12. Utilisation d'amidon ou d'un dérivé d'amidon en tant que couche de liaison intercalée dans un stratifié d'emballage pour lier une matière plastique à une couche centrale de papier ou de carton afin de fournir des propriétés barrières au gaz.
